# EUROPEAN PATENT SPECIFICATION

(11) **EP 3 842 753 B1**
(45) Date of publication and mention of the grant of the patent: **09.08.2023**
(21) Application number: 21166277.0
(22) Date of filing: 31.03.2021
(51) Int. Cl.: G01C 21/30, G01C 21/00

(54) **METHOD AND APPARATUS FOR POSITIONING A VEHICLE, VEHICLE, STORAGE MEDIUM, AND COMPUTER PROGRAM PRODUCT**
VERFAHREN UND VORRICHTUNG ZUR POSITIONIERUNG EINES FAHRZEUGES, FAHRZEUG, SPEICHER UND COMPUTERPROGRAM
PROCEDE ET APPAREIL POUR LE POSITIONNEMENT D'UN VÉHICULE, VÉHICULE, SUPPORT DE STOCKAGE ET PRODUIT PROGRAMME D'ORDINATEUR

(30) Priority: 30.07.2020 CN 202010754296
(43) Date of publication of application: 30.06.2021
(73) Proprietor: Apollo Intelligent Connectivity (Beijing) Technology Co., Ltd., Beijing 100176 (CN)
(72) Inventor: CAO, Huo, Beijing 100085 (CN); HU, Xing, Beijing 100085 (CN)
(74) Representative: Cabinet Beau de Loménie

(56) References cited:
- EP-A1- 3 413 285
- US-A1- 2019 041 867
- US-A1- 2019 323 855
- HOBERT LAURENS ET AL: "Enhancements of V2X communication in support of cooperative autonomous driving", IEEE COMMUNICATIONS MAGAZINE, IEEE SERVICE CENTER, PISCATAWAY, US, vol. 53, no. 12, 1 December 2015 (2015-12-01), pages 64-70, XP011593623, ISSN: 0163-6804, DOI: 10.1109/MCOM.2015.7355568 [retrieved on 2015-12-14]

## Description

### TECHNICAL FIELD

The present disclosure relates to the field of image processing technology, particularly to a technology such as autonomous driving and intelligent transportation, and more particularly to a method and apparatus for positioning a vehicle, a vehicle and a storage medium.

### BACKGROUND

The development of intelligent transportation will promote the intelligent reconstruction of infrastructures. In some smart cities, road-side perception devices have become road infrastructures.

However, according to the current positioning technology, in a situation such as a bad weather, a tunnel, a dense city road condition, the problems that the reliability of positioning for a vehicle is poor and the availability of the positioning is insufficient are caused due to the signal visibility of a navigation positioning system and the influence of a multipath effect.

How to solve the above problems based on a road-side perception device becomes one of the key research directions in the field of intelligent transportation.

Prior art documents US 2019/041867 A1, EP 3 413 285 A1 and US 2019/323855 A1 all relate to vehicle positioning based on matching vehicle-side and road-side object information.

### SUMMARY

Embodiments of the present disclosure provides a method and apparatus for positioning a vehicle, a vehicle, a storage medium and a computer program product according to the appended claims.

According to the technology of the present disclosure, the positioning of the vehicle based on the road-side perception device is implemented, thereby improving the reliability and the availability of the positioning for the vehicle.

It should be understood that the content described in this part is not intended to identify key or important features of embodiments of the present disclosure, and is not used to limit the scope of the present disclosure. Other features of the present disclosure will be easily understood through the following description.

### BRIEF DESCRIPTION OF THE DRAWINGS

Accompanying drawings are used for a better understanding of the scheme, and do not constitute a limitation to the present disclosure. Here:
Fig. 1 is a flowchart of a method for positioning a vehicle provided by an embodiment of the present disclosure;
Fig. 2 is a flowchart of a method for positioning a vehicle according to another embodiment of the present disclosure;
Fig. 3 is a schematic diagram of matching between location relationships according to an embodiment of the present disclosure;
Fig. 4 is schematic diagram of matching between location relationships according to another embodiment of the present disclosure;
Fig. 5 is a flowchart of a method for positioning a vehicle according to another embodiment of the present disclosure;
Fig. 6 is a flowchart of a method for positioning a vehicle according to another embodiment of the present disclosure;
Fig. 7 is schematic diagram of matching between location relationships according to another embodiment of the present disclosure;
Fig. 8 is a flowchart of a method for positioning a vehicle according to another embodiment of the present disclosure;
Fig. 9 is a schematic diagram of an apparatus for positioning a vehicle according to an embodiment of the present disclosure;
Fig. 10 is a schematic diagram of a system for positioning a vehicle according to an embodiment of the present disclosure;
Fig. 11 is a schematic diagram of a system for positioning a vehicle according to another embodiment of the present disclosure;
Fig. 12 is a schematic diagram of a system for positioning a vehicle according to another embodiment of the present disclosure; and
Fig. 13 is a block diagram of an electronic device of the method for positioning a vehicle according to embodiments of the present disclosure.

### DETAILED DESCRIPTION OF EMBODIMENTS

Exemplary embodiments of the present disclosure are described below in combination with the accompanying drawings, and various details of embodiments of the present disclosure are included in the description to facilitate understanding, and should be considered as exemplary only. Accordingly, it should be recognized by one of ordinary skill in the art that various changes and modifications may be made to the embodiments described herein within the limits of the scope of the claims. Also, for clarity and conciseness, descriptions for well-known functions and structures are omitted in the following description.

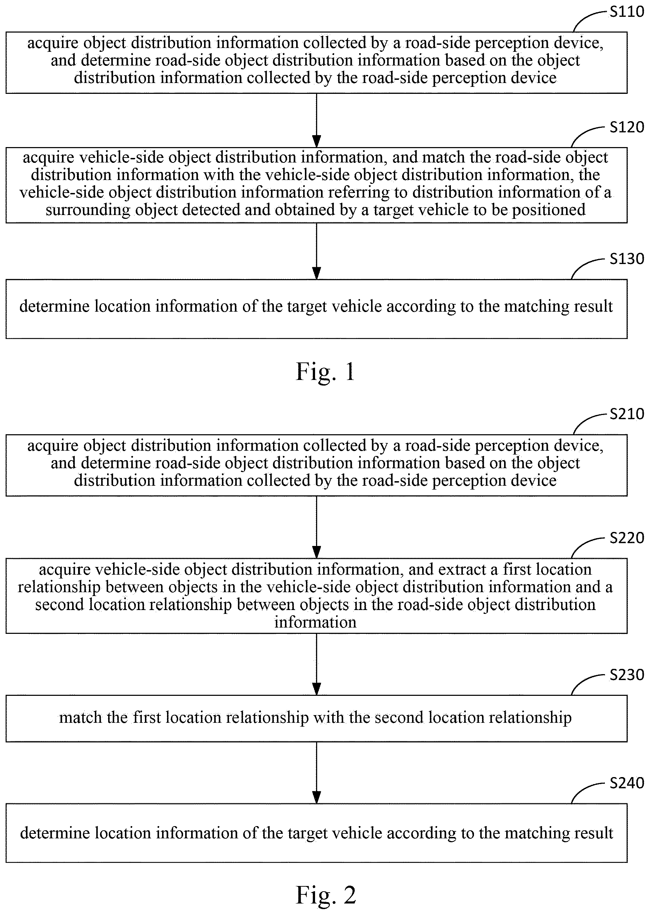

Fig. 1 is a flowchart of a method for positioning a vehicle according to an embodiment of the present disclosure. Embodiments of the present disclosure may be applicable to the situation for accurately positioning a vehicle located on a road on which a road-side perception device is provided. The method may be performed by an apparatus for positioning a vehicle. The apparatus may be implemented by means of software and/or hardware. The apparatus for positioning a vehicle may be located on a vehicle to be positioned, or may be separately provided away from the vehicle to be positioned. Referring to Fig. 1, the method for positioning a vehicle provided in an embodiment of the present disclosure includes:
S110, acquiring object distribution information collected by a road-side perception device, and determining road-side object distribution information based on the object distribution information collected by the road-side perception device.

Here, the road-side perception device refers to a device for collecting the location distribution of objects on the road, and the target vehicle to be positioned is located within the collection range of the road-side perception device. Alternatively, the road-side perception device may be any kind of road-side perception device, for example, a camera, an infrared sensor.

The object distribution information refers to the information describing location distribution of objects. Alternatively, the object distribution information may refer to a distribution image of the objects, or may refer to the distribution location data of the objects.

The object refers to all tangible substances that exist objectively in the nature. Typically, the object may be a vehicle. Alternatively, the object may also be a pedestrian, a road sign, etc.

The road-side object distribution information refers to the object distribution information obtained and collected by the road-side perception device.

In an embodiment, the determining road-side object distribution information based on the object distribution information collected by the road-side perception device includes:
using the object distribution information collected by the road-side perception device as the road-side object distribution information.

Sl20, acquiring vehicle-side object distribution information, and matching the road-side object distribution information with the vehicle-side object distribution information, the vehicle-side object distribution information referring to distribution information of a surrounding object detected and obtained by a target vehicle to be positioned.

The target vehicle refers to the vehicle to be positioned. In the target vehicle, a detection device is installed, to be used for detecting the distribution information of the surrounding objects.

Sl30, determining location information of the target vehicle according to the matching result.

Here, the location information refers to the location information of the target vehicle in a world coordinate system.

According to the embodiment of the present disclosure, the road-side object distribution information is matched with the vehicle-side object distribution information, and the location information of the target vehicle is determined according to the matching result. Thus, it is implemented that the object distribution information collected by the road-side perception device is used to assist in positioning the vehicle, thereby improving the accuracy of the positioning for the vehicle. Thus, the problems in the current positioning technology that the poor reliability and the insufficient availability of the positioning for the vehicle are caused due to the signal visibility of a positioning system and the influence of a multipath effect in a situation such as a bad weather, a tunnel, a dense city road condition are solved.

It should be noted that the method for positioning a vehicle described in embodiments of the present disclosure may be performed by the vehicle to be positioned or an apparatus for positioning a vehicle installed on the vehicle to be positioned, or may also be performed by the apparatus for positioning a vehicle that is separately provided away from the vehicle to be positioned. For ease of understanding, embodiments of the present disclosure describe an overall scheme from various angles, and may complement each other.

Fig. 2 is a flowchart of a method for positioning a vehicle according to another embodiment of the present disclosure. On the basis of the scheme described above, this scheme is an optimization for the step "matching the road-side object distribution information with the vehicle-side object distribution information." Referring to Fig. 2, the method for positioning a vehicle may include:
S210, acquiring object distribution information collected by a road-side perception device, and determining road-side object distribution information based on the object distribution information collected by the road-side perception device.

S220, acquiring vehicle-side object distribution information, and extracting a first location relationship between objects in the vehicle-side object distribution information and a second location relationship between objects in the road-side object distribution information.

Here, the vehicle-side object distribution information refers to distribution information of a surrounding objects detected by the target vehicle to be positioned.

The first location relationship refers to a location relationship between the objects in the vehicle-side object distribution information.

The second location relationship refers to a location relationship between the objects in the vehicle-side object distribution information.

In an embodiment, the first location relationship refers to the location relationship between the objects. The second location relationship refers to the location relationship between the objects in the road-side object distribution information.

S230, matching the first location relationship with the second location relationship.

In an embodiment, the first location relationship and the second location relationship are converted into topological graphs. Based on the topological graphs, the first location relationship is matched with the second location relationship.

S240, determining location information of the target vehicle according to the matching result.

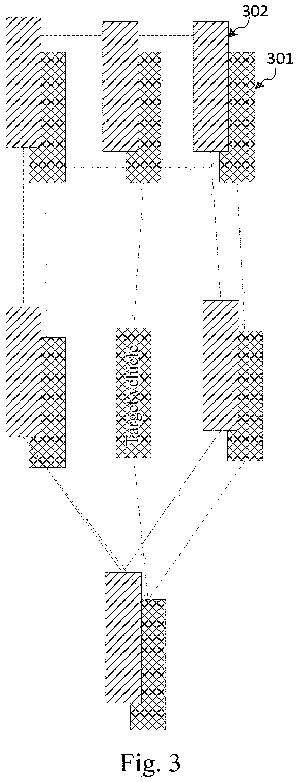

Referring to Fig. 3, in an embodiment, a topological graph 301 consisting of location relationships between objects in vehicle-side object distribution information is matched with a topological graph 302 consisting of a location relationship between objects in road-side object distribution information, thus implementing the matching between the road-side object distribution information and the vehicle-side object distribution information.

According to the scheme, the first location relationship between the objects in the vehicle-side object distribution information and the second location relationship between the objects in the road-side object distribution information are extracted, and the first location relationship is matched with the second location relationship, thus implementing the matching between the road-side object distribution information and the vehicle-side object distribution information

In order to improve the accuracy of determining the target vehicle in the road-side object distribution information, the extracting the first location relationship between objects in the vehicle-side object distribution information and the second location relationship between objects in the road-side object distribution information includes:
extracting a location relationship between the target vehicle and the surrounding object in the vehicle-side object distribution information as the first location relationship; and
taking a vehicle in the road-side object distribution information as a candidate vehicle, extracting a location relationship between the candidate vehicle and another object in the road-side object distribution information as the second location relationship.

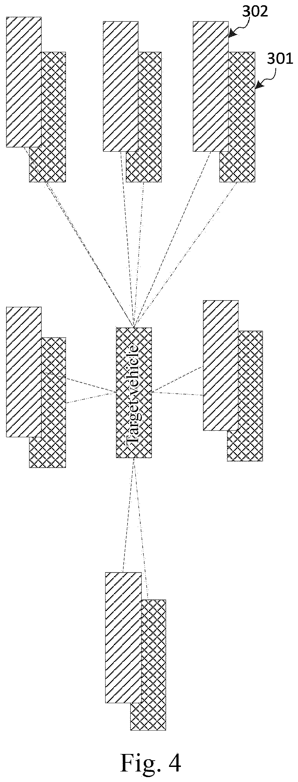

Referring to Fig. 4, in an embodiment, a topological graph 301 consisting of a location relationship between a target vehicle and a surrounding object in road-side object distribution information may be matched with a topological graph 302 consisting of a location relationship between a candidate vehicle and an other object 302 in vehicle-side object distribution information, thus implementing the matching between the road-side object distribution information and the vehicle-side object distribution information.

Based on this technical feature, according to the embodiment of the present disclosure, the location relationship between the target vehicle and the surrounding object in the road-side object distribution information is used to implement the matching between the road-side object distribution information and the vehicle-side object distribution information. The location relationship between the target vehicle and the surrounding object may more accurately describe the location relationship of the target vehicle, and thus, according to the embodiment of the present disclosure, the accuracy of positioning for the target vehicle in the road-side object distribution information may be improved.

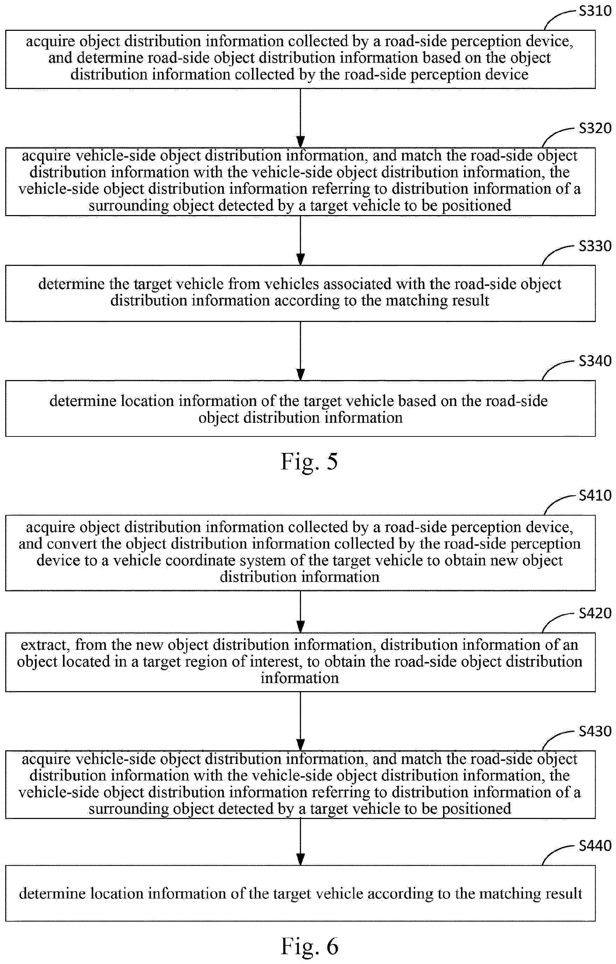

Fig. 5 is a flowchart of a method for positioning a vehicle according to another embodiment of the present disclosure. On the basis of embodiments described above, this embodiment is an optimization for the step "determining location information of the target vehicle according to the matching result." Referring to Fig. 5, the method for positioning a vehicle provided in an embodiment of the present disclosure includes:
S310, acquiring object distribution information collected by a road-side perception device, and determining road-side object distribution information based on the object distribution information collected by the road-side perception device.

S320, acquiring vehicle-side object distribution information, and matching the road-side object distribution information with the vehicle-side object distribution information, the vehicle-side object distribution information referring to distribution information of surrounding object(s) detected by a target vehicle to be positioned.

S330, determining the target vehicle from vehicles associated with the road-side object distribution information according to the matching result.

Here, the vehicles associated with the road-side object distribution information refers to vehicles included in the road-side object distribution information, that is, a vehicle located within the collection range of the road-side perception device.

S340, determining location information of the target vehicle based on the road-side object distribution information.

In an embodiment, the determining location information of the target vehicle based on the road-side object distribution information includes:
using location information of the target vehicle in the road-side object distribution information as the location information of the target vehicle.

According to this scheme, the target vehicle is determined from the vehicles associated with the road-side object distribution information according to the matching result, and the location information of the target vehicle is determined according to the road-side object distribution information, thus implementing that the location information of the target vehicle is determined according to the matching result.

Fig. 6 is a flowchart of a method for positioning a vehicle according to another embodiment of the present disclosure. On the basis of embodiments described above, this embodiment is an optimization for the step "determining road-side object distribution information based on the object distribution information collected by the road-side perception device." Referring to Fig. 6, the method for positioning a vehicle provided in an embodiment of the present disclosure includes:
S410, acquiring object distribution information collected by a road-side perception device, and converting the object distribution information collected by the road-side perception device to a vehicle coordinate system of the target vehicle to obtain new object distribution information.

S420, extracting, from the new object distribution information, distribution information of an object located in a target region of interest, to obtain the road-side object distribution information.

Here, the target region of interest refers to a detection range of the target vehicle.

S430, acquiring vehicle-side object distribution information, and matching the road-side object distribution information with the vehicle-side object distribution information, the vehicle-side object distribution information referring to distribution information of a surrounding object detected by a target vehicle to be positioned.

S440, determining location information of the target vehicle according to the matching result.

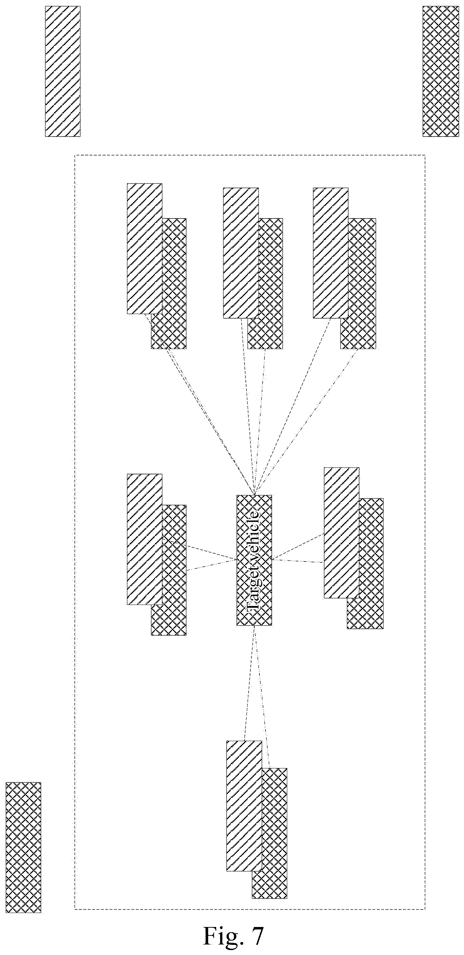

In this scheme, for the matching between the road-side object distribution information and the vehicle-side object distribution information, reference is made to Fig. 7.

According to this scheme, the coordinate systems of the road-side object distribution information and the vehicle-side object distribution information are unified, and the region corresponding to the vehicle-side object distribution information is extracted from the object distribution information collected by the road-side perception device according to the detection range of the target vehicle. The collection range of the road-side perception device is usually larger than the detection range of the target vehicle, and thus, based on this scheme, the extraction for the region of interest in the collection range of the road-side perception device may be implemented, and the region of non-interest may be filtered, thereby improving the efficiency of the positioning for the target vehicle.

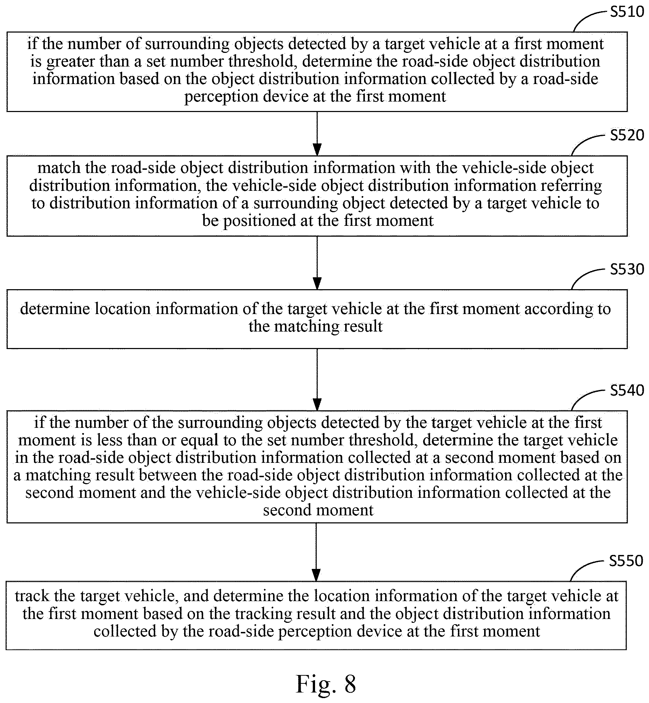

Fig. 8 is a flowchart of a method for positioning a vehicle according to another embodiment of the present disclosure. This embodiment is an alternative scheme provided on the basis of embodiments described above. Referring to Fig. 8, the method for positioning a vehicle provided in an embodiment of the present disclosure may include:
S510, if a number of surrounding objects detected by a target vehicle at a first moment is greater than a set number threshold, determining the road-side object distribution information based on the object distribution information collected by a road-side perception device at the first moment.

Here, the set number threshold may be set as required, or typically may be 0.

The first moment may be any moment. As an example, the first moment may be a current moment, or a certain moment in historical time.

S520, matching the road-side object distribution information with the vehicle-side object distribution information, the vehicle-side object distribution information referring to distribution information of a surrounding object detected by a target vehicle to be positioned at the first moment.

S530, determining location information of the target vehicle at the first moment according to the matching result.

S540, if the number of the surrounding objects detected by the target vehicle at the first moment is less than or equal to the set number threshold, determining the target vehicle in the road-side object distribution information collected at a second moment based on a matching result between the road-side object distribution information collected at the second moment and the vehicle-side object distribution information collected at the second moment.

Here, the second moment may be any moment. As an example, the second moment may be a current moment, or a certain moment in historical time.

The first moment may be earlier than the second moment, or later than the second moment.

Typically, the first moment is a current moment, and the second moment is a certain moment in historical time.

The number of surrounding objects detected by the target vehicle at the second moment is greater than the set number threshold.

S550, tracking the target vehicle, and determining the location information of the target vehicle at the first moment based on the tracking result and the object distribution information collected by the road-side perception device at the first moment.

In an embodiment, the determining the location information of the target vehicle at the first moment based on the tracking result and the object distribution information collected by the road-side perception device at the first moment includes:
Determining, based on the tracking result, a road-side perception device at a location of the target vehicle; and
determining the location information of the target vehicle based on object distribution information collected by the road-side perception device at the first moment.

This embodiment does not limit the order in which the above steps are performed. Alternatively, S540 and S550 may be performed before S510, S520 and S530.

In an embodiment, when the accuracy of the positioning result determined by the target vehicle based on a positioning system is lower than a set accuracy threshold, the execution of the above positioning logic is triggered to implement the auxiliary positioning for the vehicle.

As an example, if it is detected that the target vehicle enters a tunnel, the execution of the above positioning logic is triggered, and the determined positioning result is used as the final location of the vehicle.

According to this scheme, a different positioning logic is triggered according to the number of the surrounding objects detected by the target vehicle, thus implementing that the road-side perception device is used to assist in positioning the vehicle.

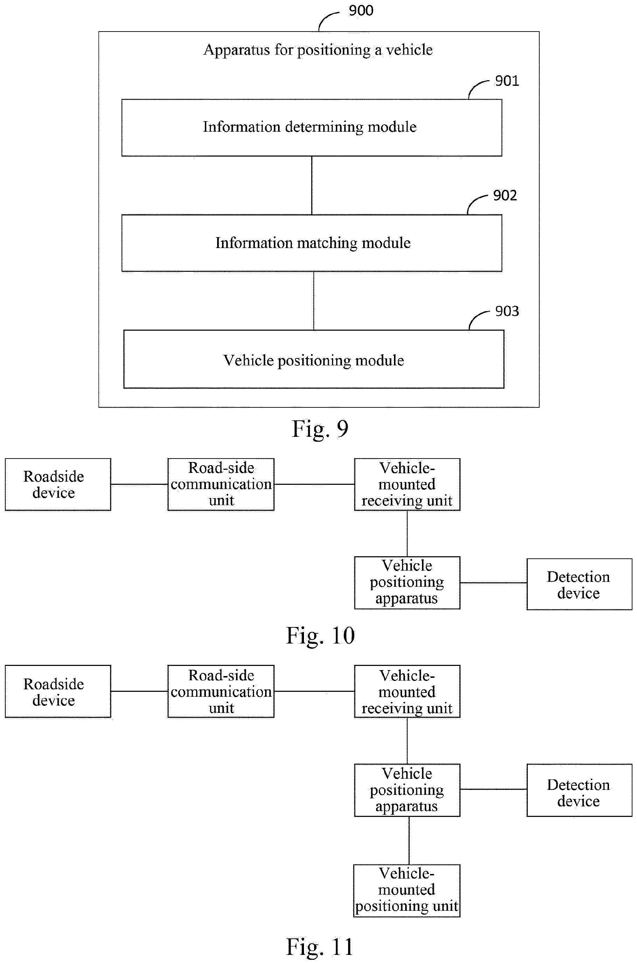

Fig. 9 is a schematic diagram of an apparatus for positioning a vehicle according to an embodiment of the present disclosure. Referring to Fig. 9, the apparatus 900 for positioning a vehicle may include: an information determining module 901, an information matching module 902 and a vehicle positioning module 903.

Here, the information determining module 901 is configured to acquire object distribution information collected by a road-side perception device, and determine road-side object distribution information according to the object distribution information collected by the road-side perception device.

The information matching module 902 is configured to acquire vehicle-side object distribution information, and match the road-side object distribution information with the vehicle-side object distribution information, the vehicle-side object distribution information referring to distribution information of a surrounding object detected by a target vehicle to be positioned; and

The vehicle positioning module 903 is configured to determine location information of the target vehicle according to the matching result.

According to the embodiment of the present disclosure, the road-side object distribution information is matched with the vehicle-side object distribution information, and the location information of the target vehicle is determined according to the matching result. Thus, it is implemented that the object distribution information collected by the road-side perception device is used to assist in positioning the vehicle, thereby improving the accuracy of the positioning for the vehicle. Thus, the problems in the current positioning technology that the poor reliability and the insufficient availability of the positioning for the vehicle are caused due to the signal visibility of a positioning system and the influence of a multipath effect in a situation such as a bad weather, a tunnel, a dense city road condition are solved.

Further, the information matching module includes:
a relationship extracting unit, configured to extract a first location relationship between objects in the vehicle-side object distribution information and a second location relationship between objects in the road-side object distribution information; and
a relationship matching unit, configured to match the first location relationship and the second location relationship.

Further, the relationship extracting unit is further configured to:
extract a location relationship between the target vehicle and the surrounding object in the vehicle-side object distribution information as the first location relationship; and
take a vehicle in the road-side object distribution information as a candidate vehicle, extract a location relationship between the candidate vehicle and another object in the road-side object distribution information as the second location relationship.

Further, the vehicle positioning module includes:
a vehicle determining unit, configured to determine, based on the matching result, the target vehicle from vehicles associated with the road-side object distribution information; and
a vehicle positioning unit, configured to determine the location information of the target vehicle based on the road-side object distribution information.

Further, the information determining module includes:
an information extracting unit, configured to extract, from the object distribution information collected by the road-side perception device, object distribution information located in a target region of interest, to obtain the road-side object distribution information.

Here, the target region of interest refers to a detection range of the target vehicle.

Further, the apparatus further includes:
a vehicle determining module, configured to, if the number of surrounding objects detected by the target vehicle at a first moment is less than or equal to a set number threshold, determine the target vehicle in road-side object distribution information at a second moment based on a matching result of between the road-side object distribution information at the second moment and vehicle-side object distribution information at the second moment.

Here, the number of surrounding objects detected by the target vehicle at the second moment is greater than the set number threshold.

The apparatus further includes: a vehicle tracking module, configured to track the target vehicle, and determine location information of the target vehicle at the first moment based on the tracking result and object distribution information collected by the road-side perception device at the first moment.

Further, the vehicle tracking module includes:
a device determining unit, configured to determine, based on the tracking result, a road-side perception device at a location of the target vehicle; and
a location determining unit, configured to determine the location information of the target vehicle based on the object distribution information collected by the road-side perception device at the first moment.

Further, the apparatus for positioning a vehicle is located on the target vehicle.

An embodiment of the present disclosure further provides a vehicle, the vehicle including:
a vehicle-mounted receiving unit, configured to receive object distribution information collected by a road-side perception device;
a detection device, configured to detect distribution information of an object surrounding the vehicle; and
a vehicle positioning apparatus, configured to acquire the object distribution information collected by the road-side perception device via the vehicle-mounted receiving unit, acquire the distribution information of the object surrounding the vehicle via the detection device, match the object distribution information collected by the road-side perception device with the distribution information of the object surrounding the vehicle detected by the detection device, and determine location information of the vehicle according to the matching result.

Alternatively, the vehicle positioning apparatus in this embodiment may be any apparatus for positioning a vehicle provided in embodiments of the present disclosure, and any method for positioning a vehicle provided in embodiments of the present disclosure is applied to the apparatus.

According to the embodiment of the present disclosure, the vehicle positioning apparatus matches the road-side object distribution information and the vehicle-side object distribution information, and determines the location information of the target vehicle according to the matching result. Thus, it is implemented that the object distribution information collected by the road-side perception device is used to assist in positioning the vehicle, thereby improving the accuracy of the positioning for the vehicle. Thus, the problems in the current positioning technology that the poor reliability and the insufficient availability of the positioning for the vehicle are caused due to the signal visibility of a positioning system and the influence of a multipath effect in a situation such as a bad weather, a tunnel, a dense city road condition are solved.

Further, the vehicle further includes:
a vehicle-mounted positioning unit, configured to position the vehicle using a positioning system.

Correspondingly, the vehicle positioning apparatus is configured to, if the positioning accuracy of the vehicle-mounted positioning unit at a first moment is less than a set accuracy threshold and the number of objects surrounding the vehicle detected by the detection device at the first moment is greater than a set number threshold, perform:
acquiring the object distribution information collected by the road-side perception device via the vehicle-mounted receiving unit, and acquiring the distribution information of the object surrounding the vehicle via the detection device;
matching the object distribution information collected by the road-side perception device with the distribution information of the object surrounding the vehicle detected by the detection device; and
determining location information of the vehicle according to the matching result, and sending the determined location information to the vehicle-mounted positioning unit to be used to replace the positioning result of the vehicle-mounted positioning unit.

Further, the vehicle further includes:
a target tracking unit, configured to, if the positioning accuracy of the vehicle-mounted positioning unit at the first moment is less than the set accuracy threshold and the number of the objects surrounding the vehicle that is detected by the detection device at the first moment is less than the set number threshold, determine the vehicle according to a matching result between object distribution information collected by the road-side perception device at a second moment and distribution information of an object surrounding the vehicle that is detected by the detection device at the second moment, and track the vehicle.

Correspondingly, the vehicle positioning apparatus is configured to determine location information of the vehicle at the first moment based on the tracking result and object distribution information collected by the road-side perception device at the first moment, and send the determined location information to the vehicle-mounted positioning unit to be used to replace the positioning result of the vehicle-mounted positioning unit.

Here, the feature having the same name as that in the above scheme has the same meaning, which will not be repeatedly described here.

Fig. 10 is a schematic diagram of a system for positioning a vehicle provided by an embodiment of the present disclosure. Referring to Fig. 10, the system for positioning a vehicle provided by the embodiment of the present disclosure may include: at least one road-side perception device, a road-side communication unit, and a vehicle. The vehicle is configured with the apparatus for positioning a vehicle as described in any of the above embodiments.

Here, the at least one road-side perception device is provided on both sides of a road and configured to collect object distribution information of an object on the road.

The road-side communication unit is configured to send the object distribution information collected by the road-side perception device.

A vehicle-mounted receiving unit in the vehicle is configured to receive the object distribution information broadcast by the road-side communication unit.

A detection device in the vehicle is configured to detect distribution information of an object surrounding the vehicle.

A vehicle positioning apparatus in the vehicle is configured to match the object distribution information collected by the road-side perception device with the distribution information of the object surrounding the vehicle detected by the detection device, and determine location information of the vehicle according to the matching result.

Alternatively, the vehicle positioning apparatus in this embodiment may be any apparatus for positioning a vehicle provided in embodiments of the present disclosure, and any method for positioning a vehicle provided in embodiments of the present disclosure is applied to the apparatus.

According to the embodiment of the present disclosure, the road-side object distribution information is matched with the vehicle-side object distribution information, and the location information of the target vehicle is determined according to the matching result. Thus, it is implemented that the object distribution information collected by the road-side perception device is used to assist in positioning the vehicle, thereby improving the accuracy of the positioning for the vehicle. Thus, the problems in the current positioning technology that the poor reliability and the insufficient availability of the positioning for the vehicle are caused due to the signal visibility of a positioning system and the influence of a multipath effect in a situation such as a bad weather, a tunnel, a dense city road condition are solved.

Referring to Fig. 11, in order to assist in positioning the vehicle, the vehicle further includes: a vehicle-mounted positioning unit, configured to perform the positioning using a positioning system of the vehicle itself.

Correspondingly, the vehicle positioning apparatus is configured to, if a positioning accuracy of the vehicle-mounted positioning unit at a first moment is less than a set accuracy threshold and the number of objects surrounding the vehicle detected by the detection device at the first moment is greater than a set number threshold, perform:
matching the distribution information of the object collected by the road-side perception device with the distribution information of the object surrounding the vehicle detected by the detection device; and
determining location information of the vehicle according to the matching result, and sending the determined location information to the vehicle-mounted positioning unit of the vehicle to be used to replace the positioning result of the vehicle-mounted positioning unit.

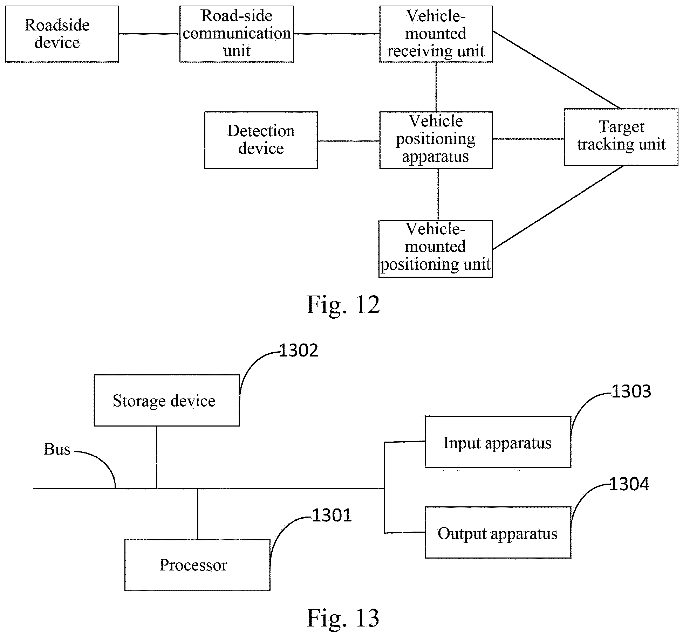

Referring to Fig. 12, in order to assist in positioning the vehicle, the system for positioning a vehicle further includes:
a target tracking unit, configured to, if the positioning accuracy of the vehicle-mounted positioning unit at the first moment is less than the set accuracy threshold and the number of the obj ects surrounding the vehicle detected by the detection device at the first moment is less than the set number threshold, based on a matching result between the object distribution information collected by the road-side perception device at a second moment and distribution information of a object surrounding the vehicle detected by the detection device at the second moment, determine the vehicle and track the vehicle.

Correspondingly, the vehicle positioning apparatus is configured to determine location information of the vehicle at the first moment based on the tracking result and the object distribution information collected by the road-side perception device at the first moment, and send the location information to the vehicle-mounted positioning unit to be used to replace the positioning result of the vehicle-mounted positioning unit.

Here, the feature having the same name as that in the above scheme has the same meaning, which will not be repeatedly described here.

According to embodiments of the present disclosure, the present disclosure further provides an electronic device and a readable storage medium.

As shown in Fig. 13, Fig. 13 is a block diagram of an electronic device of the method for positioning a vehicle according to embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may also represent various forms of mobile apparatuses such as personal digital processing, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in Fig. 13, the electronic device includes: one or more processors 1301, a memory 1302, and interfaces for connecting various components, including high-speed interfaces and low-speed interfaces. The various components are connected to each other using different buses, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories if desired. Similarly, a plurality of electronic devices may be connected, and the devices provide some necessary operations (for example, as a server array, a set of blade servers, or a multi-processor system). In Fig. 13, one processor 1301 is used as an example.

The memory 1302 is a non-transitory computer readable storage medium provided by embodiments of the present disclosure. The memory stores instructions executable by at least one processor, so that the at least one processor performs the method for positioning a vehicle provided by an embodiment of the present disclosure. The non-transitory computer readable storage medium of the present disclosure stores computer instructions for causing a computer to perform the method for positioning vehicle provided by embodiments of the present disclosure.

The memory 1302, as a non-transitory computer readable storage medium, may be used to store non-transitory software programs, non-transitory computer executable programs and modules, such as program instructions/modules corresponding to the method for positioning a vehicle in the embodiments of the present disclosure (for example, the information determining module 901, the information matching module 902, and the vehicle positioning module 903 shown in Fig. 9). The processor 1301 executes the non-transitory software programs, instructions, and modules stored in the memory 1302 to execute various functional applications and data processing of the server, that is, to implement the method for positioning a vehicle in the foregoing method embodiment.

The memory 1302 may include a storage program area and a storage data area, where the storage program area may store an operating system and at least one function required application program; and the storage data area may store data created by the use of the electronic device according to the method for positioning a vehicle, etc. In addition, the memory 1302 may include a high-speed random access memory, and may also include a non-transitory memory, such as at least one magnetic disk storage device, a flash memory device, or other non-transitory solid-state storage devices. In some embodiments, the memory 1302 may optionally include memories remotely provided with respect to the processor 1301, and these remote memories may be connected to the electronic device of the method for positioning a vehicle through a network. Examples of the above network include but are not limited to the Internet, intranet, local area network, mobile communication network, and combinations thereof.

The electronic device of the method for positioning a vehicle may further include: an input apparatus 1303 and an output apparatus 1304. The processor 1301, the memory 1302, the input apparatus 1303, and the output apparatus 1304 may be connected through a bus or in other methods. In Fig. 13, connection through a bus is used as an example.

The input apparatus 1303 may receive input digital or character information, and generate key signal inputs related to user settings and function control of the electronic device of the method for positioning a vehicle, such as touch screen, keypad, mouse, trackpad, touchpad, pointing stick, one or more mouse buttons, trackball, joystick and other input apparatuses. The output apparatus 604 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that can be executed and/or interpreted on a programmable system that includes at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) include machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, including machine readable medium that receives machine instructions as machine r eadable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN), the Internet, and blockchain networks.

The computer system may include a client and a server. The client and the server are generally far from each other and usually interact through the communication network. The relationship between the client and the server is generated by computer programs that run on the corresponding computer and have a client-server relationship with each other. The server may be a cloud server, also known as cloud computing server or cloud host, which is a host product in cloud computing service system to solve the defects of traditional physical host and VPS service, such as difficult management and weak business scalability.

According to the technical solution of embodiments of the present disclosure, the road-side perception device is based on for positioning a vehicle, which improves the reliability and availability of vehicle positioning.

It should be understood that the various forms of processes shown above may be used to reorder, add, or delete steps. For example, the steps described in embodiments of the present disclosure may be performed in parallel, sequentially, or in different orders. As long as the desired results of the technical solution disclosed in embodiments of the present disclosure can be achieved, no limitation is made herein.

## Claims

1. A method for positioning a vehicle, comprising:
acquiring (S110, S210, S310) object distribution information collected by a road-side perception device, and determining road-side object distribution information based on the object distribution information collected by the road-side perception device;
acquiring (S120, S320) vehicle-side object distribution information, and matching the road-side object distribution information with the vehicle-side object distribution information, the vehicle-side object distribution information referring to distribution information of a surrounding object detected by a target vehicle to be positioned; and
determining (S130, S240) location information of the target vehicle according to the matching result, **characterised in that** the matching the road-side object distribution information with the vehicle-side object distribution information comprises:
extracting (S220) a first location relationship between objects in the vehicle-side object distribution information and a second location relationship between objects in the road-side object distribution information, wherein the first location relationship and the second location relationship are converted into topological graphs; and
matching (S230) the first location relationship with the second location relationship, wherein a topological graph consisting of location relationships between objects in vehicle-side object distribution information is matched with a topological graph consisting of location relationships between objects in road-side object distribution information, thus implementing the matching between the road-side object distribution information and the vehicle-side object distribution information.

2. The method according to claim 1, wherein the determining (S130, S240) location information of the target vehicle based on the matching result comprises:
determining (S330), based on the matching result, the target vehicle from vehicles associated with the road-side object distribution information; and
determining (S340) the location information of the target vehicle based on the road-side object distribution information.

3. The method according to claim 1, wherein the determining (S 110, S210, S310) the road-side object distribution information based on the object distribution information collected by the road-side perception device comprises:
extracting, from the object distribution information collected by the road-side perception device, object distribution information located in a target region of interest, to obtain the road-side object distribution information,
wherein the target region of interest refers to a detection range of the target vehicle.

4. The method according to claim 1, further comprising:
in response to a number of surrounding objects detected by the target vehicle at a first moment being less than or equal to a set number threshold, determining (S540) the target vehicle in road-side object distribution information at a second moment based on a matching result between the road-side object distribution information at the second moment and vehicle-side object distribution information at the second moment, wherein the first moment is a current moment and the second moment is a moment in historical time;
wherein a number of surrounding objects detected by the target vehicle at the second moment is greater than the set number threshold, and
the method further comprises:
tracking (S550) the target vehicle, and determining location information of the target vehicle at the first moment based on the tracking result and object distribution information collected by the road-side perception device at the first moment.

5. The method according to claim 4, wherein the determining (S550) the location information of the target vehicle at the first moment based on the tracking result and the object distribution information collected by the road-side perception device at the first moment comprises:
determining, based on the tracking result, a road-side perception device at a location of the target vehicle; and
determining the location information of the target vehicle based on object distribution information collected by the road-side perception device at the first moment.

6. The method according to claim 1, wherein the method is performed by the target vehicle.

7. An apparatus (900) for positioning a vehicle, comprising:
an information determining module (901), configured to acquire (110, 210, 310) object distribution information collected by a road-side perception device, and determine road-side object distribution information according to the object distribution information collected by the road-side perception device;
an information matching module (902), configured to acquire (120, 320) vehicle-side object distribution information, and match the road-side object distribution information with the vehicle-side object distribution information, the vehicle-side object distribution information referring to distribution information of a surrounding object detected by a target vehicle to be positioned; and
a vehicle positioning module (903), configured to determine (130) location information of the target vehicle according to the matching result,
**characterised in that** the information matching module (901) comprises:
a relationship extracting unit, configured to extract a first location relationship between objects in the vehicle-side object distribution information and a second location relationship between objects in the road-side object distribution information, wherein the first location relationship and the second location relationship are converted into topological graphs; and
a relationship matching unit, configured to match the first location relationship and the second location relationship, wherein a topological graph consisting of location relationships between objects in vehicle-side object distribution information is matched with a topological graph consisting of location relationships between objects in road-side object distribution information, thus implementing the matching between the road-side object distribution information and the vehicle-side object distribution information.

8. An electronic device, comprising:
at least one processor; and
a memory storing instructions, the instructions when executed by the at least one processor, cause the at least one processor to perform the method according to any one of claims 1-5.

9. A vehicle, comprising:
a vehicle-mounted receiving unit, configured to receive object distribution information collected by a road-side perception device;
a detection device, configured to detect distribution information of an object surrounding the vehicle; and
a vehicle positioning apparatus, configured to acquire the object distribution information collected by the road-side perception device via the vehicle-mounted receiving unit, acquire the distribution information of the object surrounding the vehicle via the detection device, match the object distribution information collected by the road-side perception device with the distribution information of the object surrounding the vehicle detected by the detection device, and determine location information of the vehicle according to the matching result,
**characterised in that** the vehicle positioning apparatus is further configured to:
extract (S220) a first location relationship between objects in the vehicle-side object distribution information and a second location relationship between objects in the road-side object distribution information, wherein the first location relationship and the second location relationship are converted into topological graphs; and
match (S230) the first location relationship with the second location relationship, wherein a topological graph consisting of location relationships between objects in vehicle-side object distribution information is matched with a topological graph consisting of location relationships between objects in road-side object distribution information, thus implementing the matching between the road-side object distribution information and the vehicle-side object distribution information.

10. The vehicle according to claim 9, further comprising:
a vehicle-mounted positioning unit, configured to position the vehicle using a positioning system,
wherein the vehicle positioning apparatus is correspondingly configured to, in response to a positioning accuracy of the vehicle-mounted positioning unit at a first moment being less than a set accuracy threshold and a number of objects surrounding the vehicle detected by the detection device at the first moment being greater than a set number threshold, perform following operations:
acquiring the object distribution information collected by the road-side perception device via the vehicle-mounted receiving unit, and acquiring the distribution information of the object surrounding the vehicle via the detection device;
matching the object distribution information collected by the road-side perception device with the distribution information of the object surrounding the vehicle detected by the detection device; and
determining location information of the vehicle according to the matching result, and sending the determined location information to the vehicle-mounted positioning unit to be used to replace the positioning result of the vehicle-mounted positioning unit.

11. The vehicle according to claim 9 or 10, further comprising:
a target tracking unit, configured to, in response to the positioning accuracy of the vehicle-mounted positioning unit at the first moment being less than a set accuracy threshold and a number of objects surrounding the vehicle detected by the detection device at the first moment being less than the set number threshold, determine the vehicle according to a matching result between object distribution information collected by the road-side perception device at a second moment and distribution information of an object surrounding the vehicle detected by the detection device at the second moment, and track the vehicle;
wherein the first moment is a current moment and the second moment is a moment in historical time, and the vehicle positioning apparatus is correspondingly configured to determine location information of the vehicle at the first moment based on the tracking result and object distribution information collected by the road-side perception device at the first moment, and send the determined location information to the vehicle-mounted positioning unit to be used to replace the positioning result of the vehicle-mounted positioning unit.

12. A non-transitory computer readable storage medium, storing a computer instruction thereon, wherein the computer instruction, when executed by a processor, cause the processor to perform the method according to any one of claims 1-5.

13. A computer program product comprising a computer program, the computer program, when executed by a processor, causes the processor to implement the method according to any one of claims 1-5.

## Patentansprüche

1. Verfahren zum Positionieren eines Fahrzeugs, umfassend:
Erfassen (S110, S210, S310) von Informationen über die Verteilung von Objekten, die von einer straßenseitigen Wahrnehmungsvorrichtung gesammelt wurden, und Bestimmen von Informationen über die Verteilung straßenseitiger Objekte basierend auf den Informationen über die Verteilung von Objekten, die von der straßenseitigen Wahrnehmungsvorrichtung gesammelt wurden,
Erfassen (S120, S320) von Informationen über die Verteilung fahrzeugseitiger Objekte und Abgleichen der Informationen über die Verteilung straßenseitiger Objekte mit den Informationen über die Verteilung fahrzeugseitiger Objekte, wobei sich die Informationen über die Verteilung fahrzeugseitiger Objekte auf Verteilungsinformationen über ein umgebendes Objekt beziehen, das von einem zu positionierenden Zielfahrzeug detektiert wurde, und
Bestimmen (S130, S240) von Standortinformationen des Zielfahrzeugs gemäß dem Abgleichsergebnis, **dadurch gekennzeichnet, dass** das Abgleichen der Informationen über die Verteilung straßenseitiger Objekte mit den Informationen über die Verteilung fahrzeugseitiger Objekte umfasst:
Extrahieren (S220) einer ersten Standortbeziehung zwischen Objekten in den Informationen über die Verteilung fahrzeugseitiger Objekte und einer zweiten Standortbeziehung zwischen Objekten in den Informationen über die Verteilung straßenseitiger Objekte, wobei die erste Standortbeziehung und die zweite Standortbeziehung in topologische Diagramme umgewandelt werden, und
Abgleichen (S230) der ersten Standortbeziehung mit der zweiten Standortbeziehung, wobei ein topologisches Diagramm, das aus Standortbeziehungen zwischen Objekten in Informationen über die Verteilung fahrzeugseitiger Objekte besteht, mit einem topologischen Diagramm, das aus Standortbeziehungen zwischen Objekten in Informationen über die Verteilung straßenseitiger Objekte besteht, abgeglichen wird, wodurch das Abgleichen zwischen den Informationen über die Verteilung straßenseitiger Objekte und den Informationen über die Verteilung fahrzeugseitiger Objekte implementiert wird.

2. Verfahren nach Anspruch 1, wobei das Bestimmen (S130, S240) von Standortinformationen des Zielfahrzeugs basierend auf dem Abgleichsergebnis umfasst:
Bestimmen (S330) des Zielfahrzeugs aus Fahrzeugen, die mit den Informationen über die Verteilung straßenseitiger Objekte verknüpft sind, basierend auf dem Abgleichsergebnis, und
Bestimmen (S340) der Standortinformationen des Zielfahrzeugs basierend auf den Informationen über die Verteilung fahrzeugseitiger Objekte.

3. Verfahren nach Anspruch 1, wobei das Bestimmen (S110, S210, S310) der Informationen über die Verteilung straßenseitiger Objekte basierend auf den Informationen über die Verteilung von Objekten, die von der straßenseitigen Wahrnehmungsvorrichtung gesammelt wurden, umfasst:
Extrahieren von Informationen über die Verteilung von Objekten, die sich in einem Zielbereich von Interesse befinden, aus den Informationen über die Verteilung von Objekten, die von der straßenseitigen Wahrnehmungsvorrichtung gesammelt wurden, um die Informationen über die Verteilung straßenseitiger Objekte zu erhalten,
wobei sich der Zielbereich von Interesse auf einen Detektionsbereich des Zielfahrzeugs bezieht.

4. Verfahren nach Anspruch 1, ferner umfassend:
als Reaktion darauf, dass eine Anzahl von umgebenden Objekten, die von dem Zielfahrzeug zu einem ersten Zeitpunkt detektiert wurden, kleiner oder gleich einem festgelegten Anzahlschwellenwert ist, Bestimmen (S540) des Zielfahrzeugs in Informationen über die Verteilung straßenseitiger Objekte zu einem zweiten Zeitpunkt basierend auf einem Abgleichsergebnis zwischen den Informationen über die Verteilung straßenseitiger Objekte zu dem zweiten Zeitpunkt und den Informationen über die Verteilung fahrzeugseitiger Objekte zu dem zweiten Zeitpunkt, wobei der erste Zeitpunkt ein aktueller Zeitpunkt ist und der zweite Zeitpunkt ein Zeitpunkt in der Vergangenheit ist,
wobei eine Anzahl von umgebenden Objekten, die von dem Zielfahrzeug zu dem zweiten Zeitpunkt detektiert werden, größer als der festgelegte Anzahlschwellenwert ist, und
das Verfahren ferner umfasst:
Verfolgen (S550) des Zielfahrzeugs und Bestimmen von Standortinformationen des Zielfahrzeugs zu dem ersten Zeitpunkt basierend auf dem Verfolgungsergebnis und Informationen über die Verteilung von Objekten, die von der straßenseitigen Wahrnehmungsvorrichtung zu dem ersten Zeitpunkt gesammelt wurden.

5. Verfahren nach Anspruch 4, wobei das Bestimmen (S550) der Standortinformationen des Zielfahrzeugs zu dem ersten Zeitpunkt basierend auf dem Verfolgungsergebnis und den Informationen über die Verteilung von Objekten, die von der straßenseitigen Wahrnehmungsvorrichtung zu dem ersten Zeitpunkt gesammelt wurden, umfasst:
Bestimmen einer straßenseitigen Wahrnehmungsvorrichtung an einem Standort des Zielfahrzeugs basierend auf dem Verfolgungsergebnis, und
Bestimmen der Standortinformationen des Zielfahrzeugs basierend auf Informationen über die Verteilung von Objekten, die von der straßenseitigen Wahrnehmungsvorrichtung zu dem ersten Zeitpunkt gesammelt wurden.

6. Verfahren nach Anspruch 1, wobei das Verfahren von dem Zielfahrzeug durchgeführt wird.

7. Einrichtung (900) zum Positionieren eines Fahrzeugs, umfassend:
ein Informationsbestimmungsmodul (901), das dazu ausgestaltet ist, Informationen über die Verteilung von Objekten zu erfassen (110, 210, 310), die von einer straßenseitigen Wahrnehmungsvorrichtung gesammelt wurden, und Informationen über die Verteilung straßenseitiger Objekte entsprechend den Informationen über die Verteilung von Objekten, die von der straßenseitigen Wahrnehmungsvorrichtung gesammelt wurden, zu bestimmen,
ein Informationsabgleichsmodul (902), das dazu ausgestaltet ist, Informationen über die Verteilung fahrzeugseitiger Objekte zu erfassen (120, 320) und die Informationen über die Verteilung straßenseitiger Objekte mit den Informationen über die Verteilung fahrzeugseitiger Objekte abzugleichen, wobei sich die Informationen über die Verteilung fahrzeugseitiger Objekte auf Verteilungsinformationen über ein umgebendes Objekt, das von einem zu positionierenden Zielfahrzeug detektiert wird, beziehen, und
ein Fahrzeugpositionierungsmodul (903), das dazu ausgestaltet ist, Standortinformationen des Zielfahrzeugs entsprechend dem Abgleichsergebnis zu bestimmen (130),
**dadurch gekennzeichnet, dass** das Informationsabgleichsmodul (901) umfasst:
eine Beziehungsextraktionseinheit, die dazu ausgestaltet ist, eine erste Standortbeziehung zwischen Objekten in den Informationen über die Verteilung fahrzeugseitiger Objekte und eine zweite Standortbeziehung zwischen Objekten in den Informationen über die Verteilung straßenseitiger Objekte zu extrahieren, wobei die erste Standortbeziehung und die zweite Standortbeziehung in topologische Diagramme umgewandelt werden, und
eine Beziehungsabgleichseinheit, die dazu ausgestaltet ist, die erste Standortbeziehung und die zweite Standortbeziehung abzugleichen, wobei ein topologisches Diagramm, das aus Standortbeziehungen zwischen Objekten in Informationen über die Verteilung fahrzeugseitiger Objekte besteht, mit einem topologischen Diagramm, das aus Standortbeziehungen zwischen Objekten in Informationen über die Verteilung straßenseitiger Objekte besteht, abgeglichen wird, wodurch das Abgleichen zwischen den Informationen über die Verteilung straßenseitiger Objekte und den Informationen über die Verteilung fahrzeugseitiger Objekte implementiert wird.

8. Elektronische Vorrichtung, umfassend:
mindestens ein Prozessor, und
einen Speicher, der Anweisungen speichert, wobei die Anweisungen, wenn sie von dem mindestens einen Prozessor ausgeführt werden, den mindestens einen Prozessor veranlassen, das Verfahren nach einem der Ansprüche 1-5 auszuführen.

9. Fahrzeug, umfassend:
eine fahrzeugmontierte Empfangseinheit, die dazu ausgestaltet ist, Informationen über die Verteilung von Objekten zu empfangen, die von einer straßenseitigen Wahrnehmungsvorrichtung gesammelt wurden,
eine Detektionsvorrichtung, die dazu ausgestaltet ist, Verteilungsinformationen über ein Objekt, welches das Fahrzeug umgibt, zu detektieren, und
eine Fahrzeugpositionierungseinrichtung, die dazu ausgestaltet ist, die Informationen über die Verteilung von Objekten, die von der straßenseitigen Wahrnehmungsvorrichtung gesammelt wurden, über die fahrzeugmontierte Empfangseinheit zu erfassen, die Verteilungsinformationen über das Objekt, welches das Fahrzeug umgibt, über die Detektionsvorrichtung zu erfassen, die Informationen über die Verteilung von Objekten, die von der straßenseitigen Wahrnehmungsvorrichtung gesammelt wurden, mit den Verteilungsinformationen über das Objekt, welches das Fahrzeug umgibt und das von der Detektionsvorrichtung detektiert wurde, abzugleichen und Standortinformationen des Fahrzeugs gemäß dem Abgleichsergebnis zu bestimmen,
**dadurch gekennzeichnet, dass**
die Fahrzeugpositionierungseinrichtung ferner ausgestaltet ist zum:
Extrahieren (S220) einer ersten Standortbeziehung zwischen Objekten in den Informationen über die Verteilung fahrzeugseitiger Objekte und einer zweiten Standortbeziehung zwischen Objekten in den Informationen über die Verteilung straßenseitiger Objekte, wobei die erste Standortbeziehung und die zweite Standortbeziehung in topologische Diagramme umgewandelt werden, und
Abgleichen (S230) der ersten Standortbeziehung mit der zweiten Standortbeziehung, wobei ein topologisches Diagramm, das aus Standortbeziehungen zwischen Objekten in Informationen über die Verteilung fahrzeugseitiger Objekte besteht, mit einem topologischen Diagramm, das aus Standortbeziehungen zwischen Objekten in Informationen über die Verteilung straßenseitiger Objekte besteht, abgeglichen wird, wodurch das Abgleichen zwischen den Informationen über die Verteilung straßenseitiger Objekte und den Informationen über die Verteilung fahrzeugseitiger Objekte implementiert wird.

10. Fahrzeug nach Anspruch 9, ferner umfassend:
eine fahrzeugmontierte Positionierungseinheit, die dazu ausgestaltet ist, das Fahrzeug unter Verwendung eines Positionierungssystems zu positionieren,
wobei die Fahrzeugpositionierungseinrichtung entsprechend dazu ausgestaltet ist, als Reaktion darauf, dass eine Positionierungsgenauigkeit der fahrzeugmontierten Positionierungseinheit zu einem ersten Zeitpunkt geringer als ein festgelegter Genauigkeitsschwellenwert ist und eine Anzahl von Objekten, die das Fahrzeug umgeben, die von der Detektionsvorrichtung zu dem ersten Zeitpunkt detektiert wurden, größer als ein festgelegter Anzahlschwellenwert ist, die folgenden Operationen durchzuführen:
Erfassen der Informationen über die Verteilung von Objekten, die von der straßenseitigen Wahrnehmungsvorrichtung gesammelt wurden, über die fahrzeugmontierte Empfangseinheit und Erfassen der Verteilungsinformationen über das Objekt, welches das Fahrzeug umgibt, über die Detektionsvorrichtung,
Abgleichen der Informationen über die Verteilung von Objekten, die von der straßenseitigen Wahrnehmungsvorrichtung gesammelt wurden, mit den Verteilungsinformationen über das Objekt, welches das Fahrzeug umgibt und das von der Detektionsvorrichtung detektiert wurde, und
Bestimmen von Standortinformationen des Fahrzeugs gemäß dem Abgleichsergebnis und Senden der bestimmten Standortinformationen an die fahrzeugmontierte Positionierungseinheit, um zum Ersetzen des Positionierungsergebnisses der fahrzeugmontierten Positionierungseinheit verwendet zu werden.

11. Fahrzeug nach Anspruch 9 oder 10, ferner umfassend:
eine Zielverfolgungseinheit, die dazu ausgestaltet ist, als Reaktion darauf, dass die Positionierungsgenauigkeit der fahrzeugmontierten Positionierungseinheit zu einem ersten Zeitpunkt geringer als ein festgelegter Genauigkeitsschwellenwert ist und eine Anzahl von Objekten, die das Fahrzeug umgeben, die von der Detektionsvorrichtung zu dem ersten Zeitpunkt detektiert wurden, kleiner als der festgelegte Anzahlschwellenwert ist, das Fahrzeug gemäß einem Abgleichsergebnis zwischen Informationen über die Verteilung von Objekten, die von der straßenseitigen Wahrnehmungsvorrichtung zu einem zweiten Zeitpunkt erfasst wurden, und Verteilungsinformationen über ein Objekt, welches das Fahrzeug umgibt und das von der Detektionsvorrichtung zu dem zweiten Zeitpunkt detektiert wurde, zu bestimmen, und das Fahrzeug zu verfolgen,
wobei der erste Zeitpunkt ein aktueller Zeitpunkt ist und der zweite Zeitpunkt ein Zeitpunkt in der Vergangenheit ist und die Fahrzeugpositionierungseinrichtung entsprechend dazu ausgestaltet ist, Standortinformationen des Fahrzeugs zu dem ersten Zeitpunkt basierend auf dem Verfolgungsergebnis und Informationen über die Verteilung von Objekten, die von der straßenseitigen Wahrnehmungsvorrichtung zu dem ersten Zeitpunkt gesammelt wurden, zu bestimmen und die bestimmten Standortinformationen an die fahrzeugmontierte Positionierungseinheit zu senden, um zum Ersetzen des Positionierungsergebnisses der fahrzeugmontierten Positionierungseinheit verwendet zu werden.

12. Nichtflüchtiges, computerlesbares Speichermedium, auf dem eine Computeranweisung gespeichert ist, wobei die Computeranweisung, wenn sie von einem Prozessor ausgeführt wird, den Prozessor dazu veranlasst, das Verfahren nach einem der Ansprüche 1-5 auszuführen.

13. Computerprogrammprodukt, umfassend ein Computerprogramm, wobei das Computerprogramm, wenn es von einem Prozessor ausgeführt wird, den Prozessor dazu veranlasst, das Verfahren nach einem der Ansprüche 1-5 zu implementieren.

## Revendications

1. Procédé de positionnement d'un véhicule, comprenant :
l'acquisition (S110, S210, S310) d'une information de distribution d'objets recueillie par un dispositif de perception côté route, et la détermination d'une information de distribution d'objets côté route sur la base de l'information de distribution d'objets recueillie par le dispositif de perception côté route ;
l'acquisition (S120, S320) d'une information de distribution d'objets côté véhicule, et la mise en correspondance de l'information de distribution d'objets côté route avec l'information de distribution d'objets côté véhicule, l'information de distribution d'objets côté véhicule faisant référence à une information de distribution d'un objet environnant détecté par un véhicule cible à positionner ; et
la détermination (S130, S240) d'une information de position du véhicule cible en fonction du résultat de correspondance,
**caractérisé en ce que** la mise en correspondance de l'information de distribution d'objets côté route avec l'information de distribution d'objets côté véhicule comprend :
l'extraction (S220) d'une première relation de position entre des objets dans l'information de distribution d'objets côté véhicule et d'une seconde relation de position entre des objets dans l'information de distribution d'objets côté route, dans lequel la première relation de position et la seconde relation de position sont converties en graphes topologiques ; et
la mise en correspondance (S230) de la première relation de position avec la seconde relation de position, dans lequel un graphe topologique consistant en des relations de position entre des objets dans une information de distribution d'objets côté véhicule est mis en correspondance avec un graphe topologique consistant en des relations de position entre des objets dans une information de distribution d'objets côté route, mettant ainsi en oeuvre la mise en correspondance entre l'information de distribution d'objets côté route et l'information de distribution d'objets côté véhicule.

2. Procédé selon la revendication 1, dans lequel la détermination (S130, S240) d'une information de position du véhicule cible sur la base du résultat de correspondance comprend :
la détermination (S330), sur la base du résultat de correspondance, du véhicule cible parmi des véhicules associés à l'information de distribution d'objets côté route ; et
la détermination (S340) de l'information de position du véhicule cible sur la base de l'information de distribution d'objets côté route.

3. Procédé selon la revendication 1, dans lequel la détermination (S110, S210, S310) de l'information de distribution d'objets côté route sur la base de l'information de distribution d'objets recueillie par le dispositif de perception côté route comprend :
l'extraction, depuis l'information de distribution d'objets recueillie par le dispositif de perception côté route, d'une information de distribution d'objets située dans une région d'intérêt cible, pour obtenir l'information de distribution d'objets côté route,
dans lequel la région d'intérêt cible fait référence à une plage de détection du véhicule cible.

4. Procédé selon la revendication 1, comprenant en outre :
en réponse au fait qu'un nombre d'objets environnants détectés par le véhicule cible à un premier instant est inférieur ou égal à un seuil de nombre défini, la détermination (S540) du véhicule cible dans une information de distribution d'objets côté route à un second instant sur la base d'un résultat de correspondance entre l'information de distribution d'objets côté route au second instant et une information de distribution d'objets côté véhicule au second instant, dans lequel le premier instant est un instant en cours et le second instant est un instant dans un temps historique ;
dans lequel un nombre d'objets environnants détectés par le véhicule cible au second instant est supérieur au seuil de nombre défini, et le procédé comprend en outre :
le repérage (S550) du véhicule cible, et la détermination d'une information de position du véhicule cible au premier instant sur la base du résultat de repérage et de l'information de distribution d'objets recueillie par le dispositif de perception côté route au premier instant.

5. Procédé selon la revendication 4, dans lequel la détermination (S550) de l'information de position du véhicule cible au premier instant sur la base du résultat de repérage et de l'information de distribution d'objets recueillie par le dispositif de perception côté route au premier instant comprend :
la détermination, sur la base du résultat de repérage, d'un dispositif de perception côté route en une position du véhicule cible ; et
la détermination de l'information de position du véhicule cible sur la base d'une information de distribution d'objets recueillie par le dispositif de perception côté route au premier instant.

6. Procédé selon la revendication 1, dans lequel le procédé est réalisé par le véhicule cible.

7. Appareil (900) de positionnement d'un véhicule, comprenant :
un module de détermination d'information (901), configuré pour acquérir (110, 210, 310) une information de distribution d'objets recueillie par un dispositif de perception côté route, et déterminer une information de distribution d'objets côté route en fonction de l'information de distribution d'objets recueillie par le dispositif de perception côté route ;
un module de mise en correspondance d'informations (902), configuré pour acquérir (120, 320) une information de distribution d'objets côté véhicule, et mettre en correspondance l'information de distribution d'objets côté route avec l'information de distribution d'objets côté véhicule, l'information de distribution d'objets côté véhicule faisant référence à une information de distribution d'un objet environnant détecté par un véhicule cible à positionner ; et
un module de positionnement de véhicule (903), configuré pour déterminer (130) une information de position du véhicule cible en fonction du résultat de correspondance,
**caractérisé en ce que** le module de détermination d'information (901) comprend :
une unité d'extraction de relation, configurée pour extraire une première relation de position entre des objets dans l'information de distribution d'objets côté véhicule et une seconde relation de position entre des objets dans l'information de distribution d'objets côté route, dans lequel la première relation de position et la seconde relation de position sont converties en graphes topologiques ; et
une unité de mise en correspondance de relations, configurée pour mettre en correspondance la première relation de position avec la seconde relation de position, dans lequel un graphe topologique consistant en des relations de position entre des objets dans une information de distribution d'objets côté véhicule est mis en correspondance avec un graphe topologique consistant en des relations de position entre des objets dans une information de distribution d'objets côté route, mettant ainsi en oeuvre la mise en correspondance entre l'information de distribution d'objets côté route et l'information de distribution d'objets côté véhicule.

8. Dispositif électronique, comprenant :
au moins un processeur ; et
une mémoire stockant des instructions, les instructions lorsqu'elles sont exécutées par le au moins un processeur, amènent le au moins un processeur à réaliser le procédé selon l'une quelconque des revendications 1-5.

9. Véhicule, comprenant :
une unité de réception montée dans un véhicule, configurée pour recevoir une information de distribution d'objets recueillie par un dispositif de perception côté route ;
un dispositif de détection, configuré pour détecter une information de distribution d'un objet environnant le véhicule ; et
un appareil de positionnement de véhicule, configuré pour acquérir l'information de distribution d'objets recueillie par le dispositif de perception côté route via l'unité de réception montée dans un véhicule, acquérir l'information de distribution de l'objet environnant le véhicule via le dispositif de détection, mettre en correspondance l'information de distribution d'objets recueillie par le dispositif de perception côté route avec l'information de distribution de l'objet environnant le véhicule détecté par le dispositif de détection, et déterminer une information de position du véhicule en fonction du résultat de correspondance,
**caractérisé en ce que** l'appareil de positionnement de véhicule, est en outre configuré pour :
extraire (S220) une première relation de position entre des objets dans l'information de distribution d'objets côté véhicule et une seconde relation de position entre des objets dans l'information de distribution d'objets côté route, dans lequel la première relation de position et la seconde relation de position sont converties en graphes topologiques ; et
mettre en correspondance (S230) la première relation de position avec la seconde relation de position, dans lequel un graphe topologique consistant en des relations de position entre des objets dans une information de distribution d'objets côté véhicule est mis en correspondance avec un graphe topologique consistant en des relations de position entre des objets dans une information de distribution d'objets côté route, mettant ainsi en oeuvre la mise en correspondance entre l'information de distribution d'objets côté route et l'information de distribution d'objets côté véhicule.

10. Véhicule selon la revendication 9, comprenant en outre :
une unité de positionnement montée dans un véhicule, configurée pour positionner le véhicule à l'aide d'un système de positionnement,
dans lequel l'appareil de positionnement de véhicule est configuré de façon correspondante pour, en réponse au fait qu'une exactitude de positionnement de l'unité de positionnement montée dans un véhicule au premier instant est inférieure à un seuil d'exactitude défini et qu'un nombre d'objets environnant le véhicule détectés par le dispositif de détection au premier instant est supérieur à un seuil de nombre défini, réaliser les opérations suivantes :
acquérir l'information de distribution d'objets recueillie par le dispositif de perception côté route via l'unité de réception montée dans un véhicule, et acquérir l'information de distribution de l'objet environnant le véhicule via le dispositif de détection ;
mettre en correspondance l'information de distribution d'objets recueillie par le dispositif de perception côté route avec l'information de distribution de l'objet environnant le véhicule détectés par le dispositif de détection ; et
déterminer une information de position du véhicule en fonction du résultat de correspondance, et envoyer l'information de position déterminée à l'unité de positionnement montée dans un véhicule pour être utilisée afin de remplacer le résultat de positionnement de l'unité de positionnement montée dans un véhicule.

11. Véhicule selon la revendication 9 ou 10, comprenant en outre :
une unité de repérage de cible, configurée pour, en réponse au fait qu'une exactitude de positionnement de l'unité de positionnement montée dans un véhicule au premier instant est inférieure à un seuil d'exactitude défini et qu'un nombre d'objets environnant le véhicule détectés par le dispositif de détection au premier instant est supérieur à un seuil de nombre défini, déterminer le véhicule en fonction d'un résultat de correspondance entre une information de distribution d'objets recueillie par le dispositif de perception côté route à un second instant et une information de distribution de l'objet environnant le véhicule détecté par le dispositif de détection au second instant, et repérer le véhicule ;
dans lequel le premier instant est un instant en cours et le second instant est un instant dans un temps historique, et l'appareil de positionnement de véhicule est configuré de façon correspondante pour déterminer une information de position du véhicule au premier instant sur la base du résultat de repérage et de l'information de distribution d'objets recueillie par le dispositif de perception côté route au premier instant, et envoyer l'information de position déterminée à l'unité de positionnement montée dans un véhicule pour être utilisée afin de remplacer le résultat de positionnement de l'unité de positionnement montée dans un véhicule.

12. Support de stockage lisible par ordinateur non transitoire, stockant une instruction d'ordinateur sur celui-ci, dans lequel l'instruction d'ordinateur, lorsqu'elle est exécutée par un processeur, amène le processeur à réaliser le procédé selon l'une quelconque des revendications 1-5.

13. Produit de programme d'ordinateur comprenant un programme d'ordinateur, le programme d'ordinateur, lorsqu'il est exécuté par un processeur, amène le processeur à mettre en oeuvre le procédé selon l'une quelconque des revendications 1-5.
